# EUROPEAN PATENT SPECIFICATION

(11) **EP 1 757 021 B1**
(45) Date of publication and mention of the grant of the patent: **26.06.2013**
(21) Application number: 05736363.2
(22) Date of filing: 04.05.2005
(51) Int. Cl.: H04W 36/18

(54) **COMMUNICATION METHOD, PACKET RADIO SYSTEM, CONTROLLER AND USER TERMINAL**
KOMMUNIKATIONSVERFAHREN, PAKETFUNKSYSTEM, CONTROLLER UND BENUTZERENDGERÄT
PROCEDE DE COMMUNICATION, SYSTEME DE RADIOTRANSMISSION PAR PAQUETS, CONTROLEUR ET TERMINAL D'UTILISATEUR

(30) Priority: 07.05.2004 FI 20040652
(43) Date of publication of application: 28.02.2007
(73) Proprietor: Nokia Corporation, 02150 Espoo (FI)
(72) Inventor: XU, Zhaoji, Beijing 100013 (CN)
(74) Representative: Antila, Harri Jukka Tapani
(86) International application number: PCT/FI2005/050145
(87) International publication number: WO 2005/109753

(56) References cited:
- EP-A2- 1 043 908
- WO-A1-01/22763
- WO-A2-02/37733
- US-A1- 2003 152 031
- US-A1- 2003 152 031
- US-A1- 2003 185 159
- US-A1- 2005 094 600
- 'Technical Specification Group Radio Access Network; Radio resource management strategies (Release 4).' TECHNICAL REPORT 3GPP TR25.922 V4.0.0., [Online] March 2001, XP008114937 Retrieved from the Internet: <URL:www.3gpp.org/ftp/Specs/archive/25_seri es/25.922/25922-400.zip>
- 'Technical Specifications Group Radio Access Network; RRC Protocol Specificarion (Release 1999).' 3GPP TS 25.331 V3.6.0., [Online] March 2001, page 155 Retrieved from the Internet: <URL:www.3gpp.org/ftp/Specs/archive/25_seri es/25331-360.zip>

## Description

### BACKGROUND OF THE INVENTION:

### Field of the invention:

The invention relates to a communication method in a packet radio system, to a packet radio system, to a controller for a packet radio system and to a user terminal for a packet radio system.

### Description of the Related Art:

There are different approaches to HARQ (Hybrid Automatic Repeat reQuest) in soft handover situations. In one possible scheme, each Node B in an active set of soft handover receives data from a user terminal and transmits ACK/NACK (positive acknowledgement/negative acknowledgement) down to the user terminal. If the user terminal receives no ACK from any Node B in the active set of soft handover, retransmission occurs. If at least one ACK is received, new data is transmitted instead. With macro diversity gain and chase combining, this scheme has provided good performance when ACK/NACK signalling is free of errors.

Soft handover decisions are based on measurements of a DL CPICH (down link common pilot channel) channel. Since the quality of the uplinks between a user terminal and different Node Bs is not checked, in soft handover the quality cannot be guaranteed. In Release '99, for example, more Node Bs in the active set always mean more soft handover gains, regardless of the individual gains of each Node B. In enhanced uplink packet access (EUPA), when HARQ is used, the more Node Bs, the more signalling and also probable signalling errors. EUPA introduces enhancements in the uplink like L1-ARQ (physical layer automatic repeat request) and Node-B scheduling for increased throughput and reduced delays. Signalling errors (e.g. NACK understood as ACK) lead to adverse effects in HARQ operations.

In the downlink direction, ACK/NACK signalling does not benefit from soft handover gain, which means an increased error possibility especially for the worse links of the set. The influence of such errors in ACK/NACK understanding can be very harmful. For instance, if all the Node Bs transmit NACK and one of the NACKs is decoded by the user terminal as ACK, new data is transmitted and thus RLC (radio link control) ARQ retransmission occurs. Further, delay gain of L1-HARQ is lost. Conversely, if all the ACKs are received as NACK, unnecessary retransmission happens and the delay increases. In the uplink direction, errors in uplink signalling may result in unsynchronized HARQ processed in different Node Bs.

The existence of Node Bs with poor uplink performance (uplink unbalance) in a soft handover active set brings no valuable soft handover gain. Further, the HARQ signalling error of these Node Bs with poor uplink performance may still lead to harmful results. Thus, more Node Bs in the active set does not always mean improved performance when HARQ is used in EUPA.

Regarding the ACK/NACK understanding error, different attempts have been made to overcome the problem. One attempt is to increase the energy of ACK/NACK. However, user terminals may not have enough Rake fingers for all the Node Bs, so even the increased energy on ACK/NACK cannot guarantee that all the ACK/NACKs are received correctly. Another solution is to decode ACK/NACK only from Node Bs that are strong enough (by downlink signal strength). However, the uplink macro diversity gain can be lost when one Node B has a good uplink connection but a poor downlink signal strength. Another alternative solution is that each Node B would send ACK/NACK first to a radio network controller (RNC) and then the RNC generates a combined result of the ACK/NACK and sends it back to each Node B. As a result, the user terminal would be able to combine all the ACK/NACK from Node Bs. However, this operation requires some additional delay from RNC to Node B, which is against the aims of HARQ. US 2003/0152031 discloses a soft handover (SHO) where UE receives ACK/NACK from the active set of node Bs (NBs). EP 1 043 908 discloses selecting a subset of an active set of base stations (BS) for the purposes of data rate enhancement in 3G networks.

### SUMMARY OF THE INVENTION:

According to an aspect of the invention, there is provided a communication method in a packet radio system using a Hybrid Automatic Repeat reQuest (HARQ), the method comprising defining, by a radio network controller, a subset of an active set of soft handover, providing to a user terminal information on which base stations are included in the defined subset, and monitoring, by the user terminal, HARQ information received only from the base stations that are included in the defined subset.

According to an embodiment of the invention, there is provided a packet radio system using a Hybrid Automatic Repeat reQuest (HARQ), the packet radio system comprising a radio network controller configured to control radio resources of the packet radio system, the controller including a transceiver for communicating with a user terminal and one or more base stations of the packet radio system, and a processing unit for controlling the functions of the controller, a user terminal including a transceiver for communicating with the controller and one or more base stations of the packet radio system and a processing unit for controlling functions of the user terminal, and more than one base stations communicating with a controller and a user terminal of the packet radio system. The processing unit of the controller is further configured to define a subset of an active set of soft handover, and to provide information on which base stations are included in the defined subset, and the processing unit of the user terminal is further configured to monitor HARQ information received only from the base stations that are included in the defined subset.

According to an embodiment of the invention, there is provided a radio network controller for a packet radio system using a Hybrid Automatic Repeat reQuest (HARQ), the controller comprising a transceiver for communicating with one or more base stations and user terminals of the packet radio system, and a processing unit for controlling functions of the controller. The processing unit of the controller is further configured to define a subset of an active set of soft handover, and to provide information on which base stations are included in the defined subset for enabling a user terminal to monitor HARQ information received only from the base stations that are included in the defined subset.

According to an embodiment of the invention, there is provided a user terminal for a packet radio system using a Hybrid Automatic Repeat reQuest (HARQ), the user terminal comprising a transceiver for communicating with a radio network controller and one or more base stations of the packet radio system, and a processing unit for controlling functions of the user terminal. The processing unit is further configured to monitor HARQ information received only from the base stations that are included in a subset defined by the controller , wherein the subset is a subset of an active set of soft handover.

Another example relates to a packet radio system using a Hybrid Automatic Repeat reQuest (HARQ), the packet radio system comprising a controller for controlling one or more base stations of the packet radio system, the controller including communication means for communicating with a user terminal and one or more base stations of the packet radio system, a user terminal including communication means for communicating with the controller and base stations of the packet radio system, and more than one base stations including communication means for communicating with a controller and a user terminal of the packet radio system. The controller further comprises defining means for defining a subset of the active set of soft handover, and indication means for providing information on which base stations are included in the defined subset, and the user terminal further comprises monitoring means for monitoring HARQ information received only from the base stations that are included in the defined subset.

Another example relates to a controller for a packet radio system using a Hybrid Automatic Repeat reQuest (HARQ), the controller comprising communication means for communicating with one or more base stations and user terminals of the packet radio system, and controlling means for controlling functions of the controller. The controlling means further comprise defining means for defining a subset of an active set of soft hand over, and indicating means for providing information on which base stations are included in the defined subset for enabling the user terminal to monitor HARQ information received only from the base stations that are included in the defined subset.

Another example relates to a user terminal for a packet radio system using a Hybrid Automatic Repeat reQuest (HARQ), the user terminal comprising communication means for communicating with a controller and more than one base stations of the packet radio system, and controlling means for controlling functions of the user terminal. The controlling means are further configured to monitor HARQ information received only from the base stations that are included in a subset defined by the controller, wherein the subset is a subset of an active set of soft handover.

The embodiments of the invention provide several advantages. Traffic load in the packet radio system is reduced without losing the major soft handover gain at the same time.

### BRIEF DESCRIPTION OF THE DRAWINGS:

In the following, the invention will be described in greater detail with reference to preferred embodiments and the accompanying drawings, in which

Figure 1 shows an example of a packet radio system;

Figure 2 illustrates another example of a packet radio system;

Figure 3 illustrates an example of a communication method in a packet radio system; and

Figure 4 illustrates another example of a communication method in a packet radio system.

### DETAILED DESCRIPTION OF PREFERRED EMBODIMENTS:

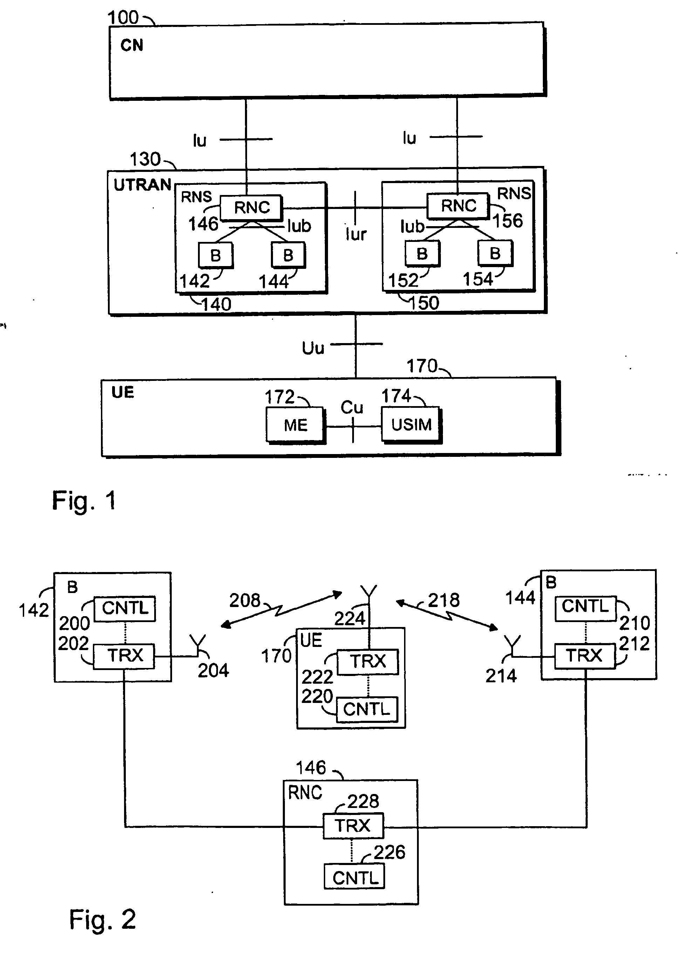

With reference to Figure 1, let us examine an example of a packet radio system to which the preferred embodiments of the invention can be applied. A packet radio system in Figure 1, known at least as UMTS (Universal Mobile Telecommunications System) and IMT-2000 (International Mobile Telecommunications 2000), represents third-generation radio systems. The embodiments are not, however, restricted to these systems described by way of example, but a person skilled in the art can also apply the instructions to other radio systems containing corresponding characteristics.

Figure 1 is a simplified block diagram, which shows the most important parts of a packet radio system and the interfaces between them at net-work-element level. The structure and functions of the network elements are not described in detail, because they are generally known.

The main parts of a packet radio system are a core network (CN) 100, a radio access network 130 and a user terminal (UE) 170. The term UTRAN is short for UMTS Terrestrial Radio Access Network, i.e. the radio access net-work 130 belongs to the third generation and is implemented by wideband code division multiple access (WCDMA) technology. The main elements of the UTRAN are a radio network controller (RNC) 146, 156, Node Bs 142, 144, 152, 154 and user terminal 170. The UTRAN is attached to the existing GSM core network 100 via an interface called lu. This interface is supported by the RNC 146, 156, which manages a set of base stations called Node Bs 142, 144, 152, 154 through interfaces called lub. The UTRAN is largely autonomous from the core network 100 since the RNCs 146, 156 are interconnected by an lur inter-face.

From the point of view of Node B 142, 144, 152, 154, i.e. a base station, there is one controlling RNC 146, 156, where its lub interface terminates. The controlling RNC 146, 156 also takes care of admission control for new mobiles or services attempting to use the Node B 142, 144, 152, 154. The controlling RNC 146, 156 and its Node Bs 142, 144, 152, 154 form an RNS (Radio Network Subsystem) 140, 150.

The user terminal 170 may comprise mobile equipment (ME) 172 and a UMTS subscriber identity module (USIM) 174. USIM 174 contains information related to the user and information related to information security in particular, for instance, an encryption algorithm. In UMTS networks, the user terminal 170 can be simultaneously connected to a plurality of Node Bs when soft handover occurs.

From the point of view of the user terminal 170, there is one serving RNC 146, 156 that terminates the link layer communications of the mobiles. From the point of view of the core network 100, the Serving RNC 146, 156 terminates the lu for this user terminal 170. The Serving RNC 146, 156 also exerts admission control for new mobiles or services attempting to use the core network 100 over its lu interface. Admission control ensures that mobiles are only allocated radio resources (bandwidth and signal/noise ratio) available in the network.

In UMTS, the most important interfaces between network elements are an lu interface between the core network 100 and the radio access net-work 130, and a Uu interface between the radio access network and a user terminal.

In the following, a packet radio system will be described by means of Figure 2. Figure 2 shows a part of a simplified packet radio system that comprises a user terminal 170, two base stations 142, 144 and a radio network controller 146. The first base station 142 comprises a transceiver 202, an antenna 204 and a processing unit 200. Likewise, the second base station 144 comprises a transceiver 212, an antenna 214 and a processing unit 210. The radio network controller 146 also comprises a transceiver 228 and a processing unit 226. The user terminal 170 comprises a transceiver 222 and an antenna 224 for establishing a radio connection, and a processing unit 220.

In the existing radio systems, wireless telecommunications connections are established by a user terminal and base stations which communicate with one another on a radio connection, i.e. calls or data transmission connections between different user terminals are established via base stations. This is illustrated in Figure 2 by radio connections 208, 218.

The processing units 200, 210, 220, 226 refer to blocks controlling functions of the device and are nowadays usually implemented as a processor and its software, but various hardware solutions are also feasible, e.g. a circuit built from logic components or one or more application-specific integrated circuits, ASICs. A hybrid of these different implementations is also feasible.

The user terminal 170 may periodically send Channel Quality Indicator (CQI) reports to Node B 142, 144 for indicating the currently supported data rate at a predetermined packet error threshold. A CQI report indicates coding and modulation schemes and the number of multicodes a user terminal can support under current radio conditions. The user terminal 170 monitors HARQ information, including ACK/NACK, from Node B 142, 144. Further, the user terminal 170 also sends an acknowledgement (ACK/NACK) message for each packet for informing when to initiate retransmissions. With channel quality measurements available for each user terminal in a cell, a packet scheduler of Node B may optimize the scheduling among the users.

In an embodiment, the processing unit 226 of the radio network controller 146 is configured to define a subset of an active set of soft handover on the basis of the performances of all the Node Bs in the active set, and to provide information on which Node Bs 142, 144 are included in the defined subset. The processing unit 220 of the user terminal 170 is then configured to monitor HARQ information only from the Node Bs 142, 144 that are included in the defined subset.

Thus, the user terminal 170 monitors the HARQ process, including ACK/NACK, only of the Node Bs in the defined subset, rather than that of the whole active set.

The subset may normally be defined to include one or more Node Bs 142, 144 from the active set, for example. However, such is also possible, that the subset is defined not to include any Node Bs 142, 144 from the active set. If the subset is defined not to include any Node Bs 142, 144, the HARQ process may be off during soft handover in those situations.

In an embodiment, the radio network controller 146 is configured to decide which Node Bs 142, 144 should be in the subset. In an embodiment, radio network controller 146 picks Node Bs 142, 144 having good uplink performance to be included in the subset on the basis of uplink measurement reports received from Node Bs 142, 144. Thus, the major soft handover gain can be achieved with this subset and the user terminal needs to listen fewer ACK/NACKs, which is favourable.

In an embodiment, the radio network controller 146 is configured to define the subset on the basis of measurements of downlink performances. The radio network controller 146 may receive measurements reports, such as CQI information, from the user terminal 170. In another embodiment, both uplink and downlink performance measurements are used when defining the subset.

The Node Bs 142, 144 included in the subset may have normal HARQ processes, and the user terminal 170 receives and monitors the HARQ information sent by the Node Bs 142, 144 in the subset. On the other hand, the Node-Bs 142, 144 in an active set of soft handover but outside the subset may still decode uplink data and send it to the radio network controller 146 as before. Regarding their ACK/NACK operation, different alternatives can be selected. In an embodiment, the Node Bs 142, 144 outside the subset still send ACK/NACK to the user terminal 170 but the user terminal 170 does not decode them. In another embodiment, the Node Bs 142, 144 outside the subset may stop sending HARQ information, including ACK/NACK. The latter alternative is possible because the decision of the subset needs to be forwarded to the user terminal 170 by Node Bs 142, 144 and thus, each Node B 142, 144 may also know whether or not it is included in the subset. The latter alternative means reduction of unnecessary interference to the radio system.

In an embodiment, for each update of an active set, the radio network controller 146 is configured to check whether new Node Bs in the active set should be in the subset. The radio network controller 146 may send the update check result with a soft handover active set update command, for example. Regarding the update of the subset, similarly to the update of an active set, this update can also be event-triggered.

The radio network controller 146 is configured to use given algorithms and thresholds to make the necessary decisions when defining the subset on the basis of uplink and/or downlink measurements reports. The measurement reports may include signal to noise ratios (EbNo) or other thresholds, for example. In an embodiment, if a measured signal to noise ratio of one Node B is lower than the signal to noise ratio of the strongest Node B by a noise ratio of the strongest Node B by a predetermined amount, this Node B is not included in the subset. For example, if the measured signal to noise ratio of a first Node B 142 is 3 dB lower than the signal to noise ratio of the strongest Node B 144, then the first Node B 142 is not included in the subset. The reason for that is that a weak Node B contributes a little, and the user terminal 170 has only a little chance to follow such a Node B's HARQ information.

In an embodiment, the radio network controller 146 is configured to add at least one additional subset update command. This command informs the user terminal 170 about which Node Bs 142, 144 in the active set should be in the subset. The update of a subset may be event-triggered. A trigger source can be a new radio network controller 146 decision on a subset, for example.

Regarding the setup and update of the soft handover active set, two alternative ways may be selected. In one embodiment, at least one more bit is added to the current soft handover active setup command and to the soft handover active set update command for indicating whether a new Node B 142, 144 should be in the subset. In another embodiment, the subset update command is sent directly after the active set setup command or the update command.

In an embodiment, Node Bs 142, 144 outside the subset may stop sending HARQ information. Node Bs 142, 144 can use discontinuous transmission (DTX) to stop sending the HARQ information. Thus, there is no need to provide information about the Node Bs 142, 144 included in the subset to the user terminal 170, and in an embodiment only the Node Bs 142, 144 are provided with the information on which Node Bs 142, 144 are included in the defined subset.

In an embodiment, user terminal 170 follows the subset commands to decide which ACK/NACK to listen to, for example. In an embodiment, the Node Bs 142, 144 in the subset may increase ACK/NACK energy for better performance. This possible because the minor and unnecessary Node Bs 142, 144 are not included and thus a fewer number of ACK/NACKs have to be received by the user terminal 170.

Such is also possible that all the Node Bs 142, 144 in the active set are defined to be included in the subset. Thus, the user terminal 170 monitors all the Node Bs in the active set because all the Node Bs are also included in the subset. In an embodiment, only a primary Node B 142, 144 is included in the subset. Thus, only the HARQ information of the primary Node B 142, 144 is monitored by the user terminal 170.

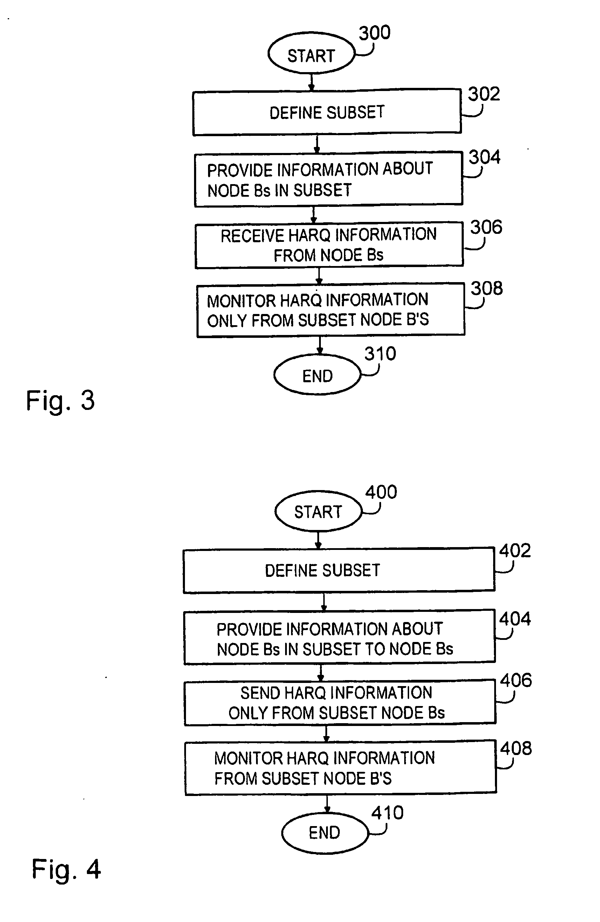

Figure 3 shows an embodiment of a communication method in a packet radio system using a Hybrid Automatic Repeat reQuest (HARQ). The method starts in 300. In 302, a subset is defined of an active set of soft handover on the basis of the performances of all the base stations in the active set. The step of defining the subset may be based on uplink and/or downlink measurement reports or uplink performance levels of the base stations in the active set. In 304, information about which base stations are included in the defined subset is provided to the user terminal. In 306, the user terminal receives HARQ information from the base stations, and in 308, the HARQ information is monitored only from the base stations that are included in the defined subset. Thus, the user terminal may still receive HARQ information from all the base stations in the active set but does not decode the HARQ information from the base stations outside the subset, for example. The method ends in 310.

Figure 4 shows another embodiment of a communication method in a packet radio system. The method starts in 400. In 402, a subset is defined to include, for example, one or more base stations from an active set of soft hand over on the basis of the performances of all the base stations in the active set. The step of defining the subset may be based on uplink and/or downlink measurement reports or uplink performance levels of the base stations in the active set. In 404, information about which base stations are included in the defined subset is provided to the user terminal. As the information about which base stations are included in the subset is sent to the user terminal via the base stations, the base stations may also have the information whether or not they are included in the subset. In 406, the user terminal receives HARQ information only from the base stations that are included in the subset. The base stations outside the subset may have stopped sending their HARQ information to the user terminal, for example. It is possible that in 404 the information about which base stations are included in the defined subset is no provided to the user terminal at all. Then only the base stations included in the subset send HARQ information to the user terminal, for example. Thus, in 408, the HARQ information is monitored only from the base stations that are included in the defined subset. The method ends in 410.

Even though the invention has been described above with reference to an example according to the accompanying drawings, it is clear that the invention is not restricted thereto but it can be modified in several ways within the scope of the appended claims.

## Claims

1. A communication method in a packet radio system using a Hybrid Automatic Repeat reQuest, HARQ, **characterized by** the method comprising:
defining (302), by a radio network controller (146), a subset of an active set of soft handover;
providing (304), to a user terminal (170), information on which base stations are included in the subset; and
monitoring (308), by the user terminal, HARQ information received only from base stations that are included in the subset.

2. The method of claim 1, wherein the step of defining the subset is further based on at least one of uplink and downlink measurement reports.

3. The method of claim 2, wherein the step of defining the subset is further based on uplink performance levels of the base stations in the active set.

4. The method of claim 2, wherein the step of defining comprises defining the subset based on the least one of the uplink and downlink measurement reports including channel quality indicator (CQI) reports.

5. The method of claim 1, the method further comprising:
sending HARQ information from the base stations in the active set of soft handover to the user terminal; and
sending the information on which base stations are included in the subset to the user terminal.

6. The method of claim 1, the method further comprising:
sending the information on which base stations are included in the subset to the base stations in the active set; and
ending sending the HARQ information to the user terminal from base stations excluded from the subset.

7. The method of claim 1, the method further comprising:
updating the subset when new base stations to be included in the subset are detected in the active set of soft handover.

8. The method of claim 1, wherein the step of defining the subset is further based on measurements of at least one of signal to noise ratios and other threshold values of the base stations in the active set.

9. The method of claim 8, the method further comprising:
defining a given base station to be excluded from the subset when a signal to noise ratio of the given base station is lower than a signal to noise ratio of a strongest base station in the active set by a predetermined amount.

10. The method of claim 1, the method further comprising:
generating at least one additional subset update command for indicating to the user terminal which base stations in the active set are included in the subset.

11. The method of claim 1, the method further comprising:
adding at least one additional bit to a current soft hand over active setup command and to a soft handover active set update command for indicating that a given base station should be included in the subset.

12. The method of claim 10, the method further comprising:
sending a subset update command after at least one of an active set setup command and an active set update command.

13. A packet radio system using a Hybrid Automatic Repeat reQuest, HARQ, the packet radio system comprising:
a radio network controller (146) configured to control radio resources of a packet radio system, the radio network controller including a transceiver (228) for communicating with a user terminal and at least one base station of the packet radio system, and a first processing unit (226) for controlling functions of the controller;
a user terminal (170) including a transceiver (222) for communicating with the radio network controller and the at least one base station of the packet radio system and a second processing unit (220) for controlling functions of the user terminal; and
more than one base stations (142, 144) communicating with the radio network controller and the user terminal of the packet radio system,
**characterized in that** the first processing unit (226) is further configured to define a subset of an active set of soft handover, and to provide information on which base stations are included in the subset, and wherein the second processing unit (220) is further configured to monitor HARQ information received only from base stations that are included in the subset.

14. The packet radio system of claim 13, wherein the first processing unit is further configured to define the subset based on at least one of uplink and downlink measurement reports.

15. The packet radio system of claim 13, wherein the base stations in the active set of soft handover are configured to send the HARQ information to the user terminal and wherein the first processing unit is further configured to send the information on which base stations are included in the subset to the user terminal.

16. The packet radio system of claim 13, wherein the first processing unit is further configured to send the information on which base stations are included in the subset to the base stations communicating with the radio network controller and the user terminal, and wherein base stations excluded from the subset are configured to end sending the HARQ information to the user terminal.

17. The packet radio system of claim 13, wherein the first processing unit is further configured to update the subset when new base stations to be included in the subset are detected in the active set of soft handover.

18. The packet radio system of claim 13, wherein the first processing unit is further configured to define the subset based on measurements of at least one of signal to noise ratios and other threshold values of the base stations in the active set.

19. The packet radio system of claim 18, wherein the first processing unit is further configured to define a given base station to be excluded from the subset when a signal to noise ratio of the given base station is lower than a signal to noise ratio of a strongest base station in the active set by a predetermined amount.

20. The packet radio system of claim 13, wherein the first processing unit is further configured to generate at least one additional subset update command for indicating to the user terminal which base stations in the active set are included in the subset.

21. The packet radio system of claim 13, wherein the first processing unit is further configured to add at least one additional bit to a current soft handover active setup command and to a soft handover active set update command for indicating that a given base station should be included in the subset.

22. A radio network controller (146) for a packet radio system using a Hybrid Automatic Repeat reQuest, HARQ, the radio network controller comprising:
communication means (228) for communicating with at least one base station and user terminal of a packet radio system; and
controlling means (226) for controlling functions of the radio network controller,
**characterized in that** the controlling means (226) of the radio network controller further comprise defining means for defining a subset of an active set of soft handover, and indicating means for providing information on which base stations are included in the subset for enabling a user terminal to monitor HARQ information received only from base stations that are included in the subset.

23. The radio network controller of claim 22, wherein the controlling means is further configured to define the subset based on at least one of uplink and downlink measurement reports.

24. The radio network controller of claim 22, wherein the controlling means is further configured to send the information on which base stations are included in the subset to the user terminal.

25. The radio network controller of claim 22, wherein the controlling means is further configured to send the information on which base stations are included in the subset to base stations of the packet radio system.

26. The radio network controller of claim 22, wherein the controlling means is further configured to update the subset when new base stations to be included in the subset are detected in the active set of soft handover.

27. The radio network controller of claim 22, wherein the controlling means is further configured to define the subset based on at least one of measurements of signal to noise ratios and other threshold values of the base stations in the active set.

28. The radio network controller of claim 27, wherein the controlling means is further configured to define a given base station to be excluded from the subset when a signal to noise ratio of the given base station is lower than a signal to noise ratio of a strongest base station in the active set by a predetermined amount.

29. A user terminal for a packet radio system using a Hybrid Automatic Repeat reQuest, HARQ, the user terminal comprising:
communication means (222) for communicating with a radio network' controller (146) and at least one base station of a packet radio system; and
controlling means (220) for controlling functions of the user terminal,
**characterized in that** the controlling means is further configured to monitor HARQ information received only from base stations that are included in a subset defined by the radio network controller, wherein the subset is a subset of an active set of soft handover.

30. The user terminal of claim 29, wherein the user terminal is further configured to receive information from the radio network controller about which base stations from the active set of soft handover are included in the subset defined by the radio network controller.

31. The user terminal of claim 30, wherein the user terminal is further configured to receive at least one additional subset update command for indicating which base stations in the active set are included in the subset when receiving information from the radio network controller.

## Patentansprüche

1. Kommunikationsverfahren in einem Paket-Funksystem, das eine hybride automatische Wiederholungsanforderung, Hybrid Automatic Repeat reQuest, HARQ, verwendet, **dadurch gekennzeichnet, dass** das Verfahren Folgendes umfasst:
Definieren (302), durch einen Funknetz-Kontroller (146), einer Untergruppe einer aktiven Soft-Handover-Gruppe;
Bereitstellen (304), für ein Benutzerendgerät (170), von Information darüber, welche Basisstationen in der Untergruppe enthalten sind; und
Überwachen (308), durch das Benutzerendgerät, von HARQ-Information, die nur von Basisstationen empfangen wird, die in der Untergruppe enthalten sind.

2. Verfahren nach Anspruch 1, wobei der Schritt zum Definieren der Untergruppe außerdem auf einem Messbericht für den Uplink und/oder Downlink basiert.

3. Verfahren nach Anspruch 2, wobei der Schritt zum Definieren der Untergruppe außerdem auf Uplink-Qualitätsniveaus der Basisstationen aus der aktiven Gruppe basiert.

4. Verfahren nach Anspruch 2, wobei der Schritt zum Definieren das Definieren der Untergruppe basierend auf dem schwächsten der Uplink- und Downlink-Messberichte basiert, wobei Berichte für den Channel-Quality-Indicator (CQI) eingeschlossen sind.

5. Verfahren nach Anspruch 1, wobei das Verfahren außerdem Folgendes umfasst:
Senden von HARQ-Information von den Basisstationen in der aktiven Soft-Handover-Gruppe an das Benutzerendgerät; und
Senden der Information darüber, welche Basisstationen in der Untergruppe enthalten sind, an das Benutzerendgerät.

6. Verfahren nach Anspruch 1, wobei das Verfahren außerdem Folgendes umfasst:
Senden der Information darüber, welche Basisstationen in der Untergruppe enthalten sind, an die Basisstationen in der aktiven Gruppe; und
Beenden des Sendens der HARQ-Information an das Benutzerendgerät von Basisstationen, die aus der Untergruppe ausgeschlossen werden.

7. Verfahren nach Anspruch 1, wobei das Verfahren außerdem Folgendes umfasst:
Aktualisieren der Untergruppe, wenn in der aktiven Soft-Handover-Gruppe neue Basisstationen detektiert werden, die in die Untergruppe aufzunehmen sind.

8. Verfahren nach Anspruch 1, wobei der Schritt zum Definieren der Untergruppe außerdem auf Messungen von Signal-Rausch-Verhältnissen und/oder weiterer Schwellwerte der Basisstationen aus der aktiven Gruppe basiert.

9. Verfahren nach Anspruch 8, wobei das Verfahren außerdem Folgendes umfasst:
Festlegen für eine gegebene Basisstation, dass sie aus der Untergruppe auszuschließen ist, wenn ein Signal-Rausch-Verhältnis der gegebenen Basisstation um einen vorgegebenen Betrag kleiner ist als ein Signal-Rausch-Verhältnis einer stärksten Basisstation aus der aktiven Gruppe.

10. Verfahren nach Anspruch 1, wobei das Verfahren außerdem Folgendes umfasst:
Erzeugen wenigstens eines zusätzlichen Befehls zur Aktualisierung der Untergruppe, um dem Benutzerendgerät mitzuteilen, welche Basisstationen aus der aktiven Gruppe in der Untergruppe enthalten sind.

11. Verfahren nach Anspruch 1, wobei das Verfahren außerdem Folgendes umfasst:
Hinzufügen wenigstens eines zusätzlichen Bits zu einem aktuellen Aktiv-Setup-Befehl für Soft-Handover und zu einem Aktualisierungsbefehl für eine aktive Soft-Handover-Gruppe, um anzuzeigen, dass eine gegebene Basisstation in die Untergruppe aufgenommen werden sollte.

12. Verfahren nach Anspruch 10, wobei das Verfahren außerdem Folgendes umfasst:
Senden eines Untergruppen-Aktualisierungsbefehls nach einem Setupbefehl für eine aktive Gruppe und/oder einem Aktualisierungsbefehl für eine aktive Gruppe.

13. Paket-Funksystem, das eine hybride automatische Wiederholungsanforderung, Hybrid Automatic Repeat reQuest, HARQ, verwendet, wobei das Paket-Funksystem Folgendes umfasst:
einen Funknetz-Kontroller (146), der dafür eingerichtet ist, Funkressourcen eines Paket-Funksystems zu verwalten, wobei der Funknetz-Kontroller Folgendes umfasst: einen Transceiver (228) zur Kommunikation mit einem Benutzerendgerät und wenigstens einer Basisstation des Paket-Funksystems und eine erste Verarbeitungseinheit (226) zur Steuerung von Funktionen des Kontrollers;
ein Benutzerendgerät (170), das Folgendes umfasst: einen Transceiver (222) zur Kommunikation mit dem Funknetz-Kontroller und der wenigstens einen Basisstation des Paket-Funksystems und eine zweite Verarbeitungseinheit (220) zur Steuerung von Funktionen des Benutzerendgeräts; und
mehr als eine Basisstation (142, 144), die mit dem Funknetz-Kontroller und dem Benutzerendgerät des Paket-Funksystems kommunizieren,
**dadurch gekennzeichnet, dass** die erste Verarbeitungseinheit (226) außerdem dafür eingerichtet ist, eine Untergruppe einer aktiven Soft-Handover-Gruppe zu definieren und Information darüber bereitzustellen, welche Basisstationen in der Untergruppe enthalten sind, wobei die zweite Verarbeitungseinheit (220) außerdem dafür eingerichtet ist, HARQ-Information zu überwachen, die nur von Basisstationen empfangen wird, die in der Untergruppe enthalten sind.

14. Paket-Funksystem nach Anspruch 13, wobei die erste Verarbeitungseinheit außerdem dafür eingerichtet ist, die Untergruppe basierend auf einem Uplink- und/oder einem Downlink-Messbericht zu definieren.

15. Paket-Funksystem nach Anspruch 13, wobei die Basisstationen in der aktiven Soft-Handover-Gruppe dafür eingerichtet sind, die HARQ-Information an das Benutzerendgerät zu senden und wobei die erste Verarbeitungseinheit außerdem dafür eingerichtet ist, die Information darüber, welche Basisstationen in der Untergruppe enthalten sind, an das Benutzerendgerät zu senden.

16. Paket-Funksystem nach Anspruch 13, wobei die erste Verarbeitungseinheit außerdem dafür eingerichtet ist, die Information darüber, welche Basisstationen in der Untergruppe enthalten sind, an die Basisstationen zu senden, die mit dem Funknetz-Kontroller und dem Benutzerendgerät kommunizieren, und wobei die Basisstationen, die aus der Untergruppe ausgeschlossen werden, dafür eingerichtet sind, das senden der HARQ-Information an das Benutzerendgerät zu beenden.

17. Paket-Funksystem nach Anspruch 13, wobei die erste Verarbeitungseinheit außerdem dafür eingerichtet ist, die Untergruppe zu aktualisieren, wenn in der aktiven Soft-Handover-Gruppe neue Basisstationen detektiert werden, die in die Untergruppe aufzunehmen sind.

18. Paket-Funksystem nach Anspruch 13, wobei die erste Verarbeitungseinheit außerdem dafür eingerichtet ist, die Untergruppe basierend auf Messungen von Signal-Rausch-Verhältnissen und/oder weiterer Schwellwerte der Basisstationen aus der aktiven Gruppe zu definieren.

19. Paket-Funksystem nach Anspruch 18, wobei die erste Verarbeitungseinheit außerdem dafür eingerichtet ist, für eine gegebene Basisstation festzulegen, dass sie aus der Untergruppe auszuschließen ist, wenn ein Signal-Rausch-Verhältnis der gegebenen Basisstation um einen vorgegebenen Betrag kleiner ist als ein Signal-Rausch-Verhältnis einer stärksten Basisstation aus der aktiven Gruppe.

20. Paket-Funksystem nach Anspruch 13, wobei die erste Verarbeitungseinheit außerdem dafür eingerichtet ist, wenigstens einen zusätzlichen Befehl zur Aktualisierung der Untergruppe zu erzeugen, um dem Benutzerendgerät mitzuteilen, welche Basisstationen aus der aktiven Gruppe in der Untergruppe enthalten sind.

21. Paket-Funksystem nach Anspruch 13, wobei die erste Verarbeitungseinheit außerdem dafür eingerichtet ist, wenigstens ein zusätzliches Bit zu einem aktuellen Aktiv-Setup-Befehl für Soft-Handover und zu einem Aktualisierungsbefehl für eine aktive Soft-Handover-Gruppe hinzuzufügen, um anzuzeigen, dass eine gegebene Basisstation in die Untergruppe aufgenommen werden sollte.

22. Funknetz-Kontroller (146) für ein Paket-Funksystem, das eine hybride automatische Wiederholungsanforderung, Hybrid Automatic Repeat reQuest, HARQ, verwendet, wobei der Funknetz-Kontroller Folgendes umfasst:
ein Kommunikationsmittel (228) zur Kommunikation mit wenigstens einer Basisstation und einem Benutzerendgerät eines Paket-Funksystems; und
ein Steuerungsmittel(226) zur Steuerung von Funktionen des Funknetz-Kontrollers,
**dadurch gekennzeichnet, dass** das Steuerungsmittel (226) des Funknetz-Kontrollers außerdem Folgendes umfasst: ein Festlegungsmittel zum Festlegen einer Untergruppe einer aktiven Soft-Handover-Gruppe und ein Anzeigemittel zum Bereitstellen von Information darüber, welche Basisstationen in der Untergruppe enthalten sind, um ein Benutzerendgerät zu befähigen, HARQ-Information zu überwachen, die nur von Basisstationen empfangen wird, die in der Untergruppe enthalten sind.

23. Funknetz-Kontroller nach Anspruch 22, wobei das Steuerungsmittel außerdem dafür eingerichtet ist, die Untergruppe basierend auf einem Messbericht für den Uplink und/oder Downlink zu definieren.

24. Funknetz-Kontroller nach Anspruch 22, wobei das Steuerungsmittel außerdem dafür eingerichtet ist, die Information darüber, welche Basisstationen in der Untergruppe enthalten sind, an das Benutzerendgerät zu senden.

25. Funknetz-Kontroller nach Anspruch 22, wobei das Steuerungsmittel außerdem dafür eingerichtet ist, die Information darüber, welche Basisstationen in der Untergruppe enthalten sind, an Basisstationen des Paket-Funksystems zu senden.

26. Funknetz-Kontroller nach Anspruch 22, wobei das Steuerungsmittel außerdem dafür eingerichtet ist, die Untergruppe zu aktualisieren, wenn in der aktiven Soft-Handover-Gruppe neue Basisstationen detektiert werden, die in die Untergruppe aufzunehmen sind.

27. Funknetz-Kontroller nach Anspruch 22, wobei das Steuerungsmittel außerdem dafür eingerichtet ist, die Untergruppe basierend auf Messungen von Signal-Rausch-Verhältnissen und/oder weiterer Schwellwerte der Basisstationen aus der aktiven Gruppe zu definieren.

28. Funknetz-Kontroller nach Anspruch 27, wobei das Steuerungsmittel außerdem dafür eingerichtet ist, für eine gegebene Basisstation festzulegen, dass sie aus der Untergruppe auszuschließen ist, wenn ein Signal-Rausch-Verhältnis der gegebenen Basisstation um einen vorgegebenen Betrag kleiner ist als ein Signal-Rausch-Verhältnis einer stärksten Basisstation aus der aktiven Gruppe.

29. Benutzerendgerät für ein Paket-Funksystem, das eine hybride automatische Wiederholungsanforderung, Hybrid Automatic Repeat reQuest, HARQ, verwendet, wobei das Benutzerendgerät Folgendes umfasst:
ein Kommunikationsmittel (222) zum Kommunizieren mit einem Funknetz-Kontroller (146) und wenigstens einer Basisstation eines Paket-Funksystems; und
ein Steuerungsmittel (220) zum Steuern von Funktionen des Benutzerendgeräts,
**dadurch gekennzeichnet, dass** das Steuerungsmittel außerdem dafür eingerichtet ist, HARQ-Information zu überwachen, die nur von Basisstationen empfangen wird, die in einer Untergruppe enthalten sind, die vom Funknetz-Kontroller definiert wird, wobei die Untergruppe eine Untergruppe einer aktiven Soft-Handover-Gruppe ist.

30. Benutzerendgerät nach Anspruch 29, wobei das Benutzerendgerät außerdem dafür eingerichtet ist, vom Funknetz-Kontroller Information darüber zu empfangen, welche Basisstationen aus der aktiven Soft-Handover-Gruppe in der durch den Funknetz-Kontroller definierten Untergruppen enthalten sind.

31. Benutzerendgerät nach Anspruch 30, wobei das Benutzerendgerät außerdem dafür eingerichtet ist, wenigstens einen zusätzlichen Untergruppen-Aktualisierungsbefehl zu empfangen, um anzuzeigen, welche Basisstationen aus der aktiven Gruppe in der Untergruppe enthalten sind, wenn Information vom Funknetz-Kontroller empfangen wird.

## Revendications

1. Procédé de communication dans un système de radiotransmission par paquets utilisant une demande de répétition automatique hybride, HARQ, **caractérisé en ce que** le procédé comporte :
la définition (302), par un contrôleur de réseau radio (146), d'un sous-ensemble d'un ensemble actif de transferts intercellulaires sans coupure ;
la fourniture (304), à un terminal d'utilisateur (170), d'informations indiquant quelles stations de base sont incluses dans le sous-ensemble ; et
la surveillance (308), par le terminal d'utilisateur, d'informations de demande HARQ reçues uniquement à partir de stations de base qui sont incluses dans le sous-ensemble.

2. Procédé selon la revendication 1, dans lequel l'étape de définition du sous-ensemble est en outre basée sur au moins des rapports de mesure en liaison descendante et / ou en liaison montante.

3. Procédé selon la revendication 2, dans lequel l'étape de définition du sous-ensemble est en outre basée sur des niveaux de performances en liaison montante des stations de base dans l'ensemble actif.

4. Procédé selon la revendication 2, dans lequel l'étape de définition comprend la définition du sous-ensemble sur la base du fait que ledit au moins un parmi les rapports de mesure en liaison descendante et en liaison montante comporte des rapports d'indicateur de qualité de canal (CQI).

5. Procédé selon la revendication 1, dans lequel le procédé comporte en outre :
l'envoi d'informations de demande HARQ, des stations de base dans l'ensemble actif de transferts intercellulaires sans coupure au terminal d'utilisateur ; et
l'envoi des informations indiquant quelles stations de base sont incluses dans le sous-ensemble au terminal d'utilisateur.

6. Procédé selon la revendication 1, dans lequel le procédé comporte en outre :
l'envoi des informations indiquant quelles stations de base sont incluses dans le sous-ensemble aux stations de base dans l'ensemble actif ; et
l'interruption de l'envoi des informations de demande HARQ au terminal d'utilisateur à partir de stations de base exclues du sous-ensemble.

7. Procédé selon la revendication 1, dans lequel le procédé comporte en outre :
la mise à jour du sous-ensemble lorsque de nouvelles stations de base, à inclure dans le sous-ensemble, sont détectées dans l'ensemble actif de transferts intercellulaires sans coupure.

8. Procédé selon la revendication 1, dans lequel l'étape de définition du sous-ensemble est en outre basée sur des mesures d'au moins des rapports signal sur bruit et / ou d'autres valeurs seuil des stations de base dans l'ensemble actif.

9. Procédé selon la revendication 8, dans lequel le procédé comporte en outre :
la définition d'une station de base donnée à exclure du sous-ensemble lorsqu'un rapport signal sur bruit de la station de base donnée est inférieur, d'une quantité prédéterminée, à un rapport signal sur bruit d'une station de base la plus puissante dans l'ensemble actif.

10. Procédé selon la revendication 1, dans lequel le procédé comporte en outre :
la génération d'au moins une commande de mise à jour de sous-ensemble supplémentaire en vue d'indiquer au terminal d'utilisateur quelles stations de base dans l'ensemble actif sont incluses dans le sous-ensemble.

11. Procédé selon la revendication 1, dans lequel le procédé comporte en outre :
l'ajout d'au moins un bit supplémentaire à une commande d'établissement actif de transfert intercellulaire sans coupure en cours et à une commande de mise à jour d'ensemble actif de transferts intercellulaires sans coupure, en vue d'indiquer qu'une station de base donnée devrait être incluse dans le sous-ensemble.

12. Procédé selon la revendication 10, dans lequel le procédé comporte en outre : l'envoi d'une commande de mise à jour de sous-ensemble suite à au moins une commande d'établissement d'ensemble actif et / ou une commande de mise à jour d'ensemble actif.

13. Système de radio-transmission par paquets utilisant une demande de répétition automatique hybride, HARQ, le système de radiotransmission par paquets comprenant :
un contrôleur de réseau radio (146) configuré de manière à contrôler des ressources radio d'un système de radiotransmission par paquets, le contrôleur de réseau radio incluant un émetteur-récepteur (228) destiné à communiquer avec un terminal d'utilisateur et au moins une station de base du système de radiotransmission par paquets, et une première unité de traitement (226) destinée à commander les fonctions du contrôleur ;
un terminal d'utilisateur (170) incluant un émetteur-récepteur (222) destiné à communiquer avec le contrôleur de réseau radio et ladite au moins une station de base du système de radiotransmission par paquets, et une seconde unité de traitement (220) destinée à commander les fonctions du terminal d'utilisateur ; et
plus d'une station de base (142, 144) communiquant avec le contrôleur de réseau radio et le terminal d'utilisateur du système de radiotransmission par paquets ;
**caractérisé en ce que** la première unité de traitement (226) est en outre configurée de manière à définir un sous-ensemble d'un ensemble actif de transferts intercellulaires sans coupure, et à fournir des informations indiquant quelles stations de base sont incluses dans le sous-ensemble, et dans lequel la seconde unité de traitement (220) est en outre configurée de manière à surveiller des informations de demande HARQ reçues uniquement à partir de stations de base qui sont incluses dans le sous-ensemble.

14. Système de radiotransmission par paquets selon la revendication 13, dans lequel la première unité de traitement est en outre configurée de manière à définir le sous-ensemble sur la base d'au moins l'un parmi des rapports de mesure en liaison descendante et en liaison montante.

15. Système de radiotransmission par paquets selon la revendication 13, dans lequel les stations de base dans l'ensemble actif de transferts intercellulaires sans coupure sont configurées de manière à envoyer les informations de demande HARQ au terminal d'utilisateur, et dans lequel la première unité de traitement est en outre configurée de manière à envoyer, au terminal d'utilisateur, les informations indiquant quelles stations de base sont incluses dans le sous-ensemble.

16. Système de radiotransmission par paquets selon la revendication 13, dans lequel la première unité de traitement est en outre configurée de manière à envoyer les informations indiquant quelles stations de base sont incluses dans le sous-ensemble aux stations de base communiquant avec le contrôleur de réseau radio et le terminal d'utilisateur, et dans lequel des stations de base exclues du sous-ensemble sont configurées de manière à mettre fin à l'envoi des informations de demande HARQ au terminal d'utilisateur.

17. Système de radiotransmission par paquets selon la revendication 13, dans lequel la première unité de traitement est en outre configurée de manière à mettre à jour le sous-ensemble lorsque de nouvelles stations de base à inclure dans le sous-ensemble sont détectées dans l'ensemble actif de transferts intercellulaires sans coupure.

18. Système de radiotransmission par paquets selon la revendication 13, dans lequel la première unité de traitement est en outre configurée de manière à définir le sous-ensemble sur la base de mesures d'au moins des rapports signal sur bruit et / ou d'autres valeurs seuil des stations de base dans l'ensemble actif.

19. Système de radio-transmission par paquets selon la revendication 18, dans lequel la première unité de traitement est en outre configurée de manière à définir une station de base donnée à exclure du sous-ensemble, lorsqu'un rapport signal sur bruit de la station de base donnée est inférieur, d'une quantité prédéterminée, à un rapport signal sur bruit d'une station de base la plus puissante dans l'ensemble actif.

20. Système de radio-transmission par paquets selon la revendication 13, dans lequel la première unité de traitement est en outre configurée de manière à générer au moins une commande de mise à jour de sous-ensemble supplémentaire, en vue d'indiquer au terminal d'utilisateur quelles stations de base dans l'ensemble actif sont incluses dans le sous-ensemble.

21. Système de radio-transmission par paquets selon la revendication 13, dans lequel la première unité de traitement est en outre configurée de manière à ajouter au moins un bit supplémentaire à une commande d'établissement actif de transfert intercellulaire sans coupure en cours, et à une commande de mise à jour d'ensemble actif de transferts intercellulaires sans coupure, en vue d'indiquer qu'une station de base donnée devrait être incluse dans le sous-ensemble.

22. Contrôleur de réseau radio (146) pour un système de radio-transmission par paquets utilisant une demande de répétition automatique hybride, HARQ, le contrôleur de réseau radio comprenant :
un moyen de communication (228) destiné à communiquer avec au moins une station de base et un terminal d'utilisateur d'un système de radiotransmission par paquets ; et
un moyen de commande (226) destiné à commander les fonctions du contrôleur de réseau radio ;
**caractérisé en ce que** le moyen de commande (226) du contrôleur de réseau radio comporte en outre un moyen de définition destiné à définir un sous-ensemble d'un ensemble actif de transferts intercellulaires sans coupure, et un moyen d'indication destiné à fournir des informations indiquant quelles stations de base sont incluses dans le sous-ensemble, en vue de permettre à un terminal d'utilisateur de surveiller des informations de demande HARQ reçues uniquement à partir de stations de base qui sont incluses dans le sous-ensemble.

23. Contrôleur de réseau radio selon la revendication 22, dans lequel le moyen de commande est en outre configuré de manière à définir le sous-ensemble sur la base d'au moins des rapports de mesure en liaison descendante et / ou en liaison montante.

24. Contrôleur de réseau radio selon la revendication 22, dans lequel le moyen de commande est en outre configuré de manière à envoyer, au terminal d'utilisateur, les informations indiquant quelles stations de base sont incluses dans le sous-ensemble.

25. Contrôleur de réseau radio selon la revendication 22, dans lequel le moyen de commande est en outre configuré de manière à envoyer les informations indiquant quelles stations de base sont incluses dans le sous-ensemble à des stations de base du système de radiotransmission par paquets.

26. Contrôleur de réseau radio selon la revendication 22, dans lequel le moyen de commande est en outre configuré de manière à mettre à jour le sous-ensemble, lorsque de nouvelles stations de base à inclure dans le sous-ensemble sont détectées dans l'ensemble actif de transferts intercellulaires sans coupure.

27. Contrôleur de réseau radio selon la revendication 22, dans lequel le moyen de commande est en outre configuré de manière à définir le sous-ensemble sur la base d'au moins des mesures de rapports signal sur bruit et / ou d'autres valeurs seuil des stations de base dans l'ensemble actif.

28. Contrôleur de réseau radio selon la revendication 27, dans lequel le moyen de commande est en outre configuré de manière à définir une station de base donnée à exclure du sous-ensemble lorsqu'un rapport signal sur bruit de la station de base donnée est inférieur, d'une quantité prédéterminée, à un rapport signal sur bruit d'une station de base la plus puissante dans l'ensemble actif.

29. Terminal d'utilisateur pour un système de radiotransmission par paquets utilisant une demande de répétition automatique hybride, HARQ, le terminal d'utilisateur comprenant :
un moyen de communication (222) pour communiquer avec un contrôleur de réseau radio (146) et au moins une station de base d'un système de radiotransmission par paquets ; et
un moyen de commande (220) pour commander les fonctions du terminal d'utilisateur,
**caractérisé en ce que** le moyen de commande est en outre configuré de manière à surveiller des informations de demande HARQ reçues uniquement à partir de stations de base qui sont incluses dans un sous-ensemble défini par le contrôleur de réseau radio, dans lequel le sous-ensemble est un sous-ensemble d'un ensemble actif de transferts intercellulaires sans coupure.

30. Terminal d'utilisateur selon la revendication 29, dans lequel le terminal d'utilisateur est en outre configuré de manière à recevoir des informations en provenance du contrôleur de réseau radio indiquant quelles stations de base de l'ensemble actif de transferts intercellulaires sans coupure sont incluses dans le sous-ensemble défini par le contrôleur de réseau radio.

31. Terminal d'utilisateur selon la revendication 30, dans lequel le terminal d'utilisateur est en outre configuré de manière à recevoir au moins une commande de mise à jour de sous-ensemble supplémentaire pour indiquer quelles stations de base dans l'ensemble actif sont incluses dans le sous-ensemble lors de la réception d'informations à partir du contrôleur de réseau radio.
